# EUROPÄISCHE PATENTSCHRIFT

(11) **EP 3 114 010 B1**
(45) Veröffentlichungstag und Bekanntmachung des Hinweises auf die Patenterteilung: **22.08.2018**
(21) Anmeldenummer: 15706477.5
(22) Anmeldetag: 25.02.2015
(51) Int. Cl.: B62D 5/04, F16D 3/10, B62D 5/083, B62D 6/10

(54) **LENKWELLE FÜR EINE KRAFTFAHRZEUGLENKUNG**
STEERING SHAFT FOR A MOTOR VEHICLE STEERING SYSTEM
ARBRE DE DIRECTION POUR SYSTÈME DE DIRECTION DE VÉHICULE AUTOMOBILE

(30) Priorität: 04.03.2014 DE 102014102807
(43) Veröffentlichungstag der Anmeldung: 11.01.2017
(73) Patentinhaber: ThyssenKrupp Presta AG, 9492 Eschen (LI); thyssenkrupp AG, 45143 Essen (DE)
(72) Erfinder: STROBEL, Joseph-Léon, CH-9493 Mauren (LI)
(74) Vertreter: thyssenkrupp Intellectual Property GmbH
(86) Internationale Anmeldenummer: PCT/EP2015/053955
(87) Internationale Veröffentlichungsnummer: WO 2015/132106

(56) Entgegenhaltungen:
- DE-A1- 19 937 282
- DE-A1-102010 039 125
- DE-A1-102013 219 883

## Beschreibung

### Technisches Gebiet

Die vorliegende Erfindung betrifft eine Lenkwelle für eine Kraftfahrzeuglenkung, umfassend mindestens einen ersten Wellenteil mit einer Bohrung, in welcher ein Drehstab zur drehelastischen Kopplung des ersten Wellenteils an einen zweiten Wellenteil zur Übertragung eines Drehmomentes aufgenommen ist. Bevorzugt ist die Lenkwelle für eine Kraftfahrzeuglenkung zur Verwendung mit einem Lenksystem mit einer Hilfskraftunterstützung vorgesehen.

### Stand der Technik

Im Bereich von Lenkwellen für Kraftfahrzeuglenkungen ist es bekannt, ein über eine Eingangswelle eingetragenes Drehmoment relativ zu einer Ausgangswelle zu bestimmen. Das so bestimmte Drehmoment kann die Grundlage für die Bestimmung eines in das Lenksystem einzubringenden Hilfsdrehmomentes beziehungsweise einer Hilfskraft einer Hilfskraftunterstützung zur Lenkunterstützung des Fahrers darstellen. Hierzu ist es bekannt, die Lenkwelle des Kraftfahrzeuges in eine Eingangswelle und eine Ausgangswelle zu unterteilen, wobei die Eingangswelle üblicherweise mit dem Lenkrad des Kraftfahrzeuges verbunden ist, über welches ein Fahrer das entsprechende Lenkdrehmoment beziehungsweise den entsprechenden Lenkbefehl in die Eingangswelle einträgt. Die Ausgangswelle ist üblicherweise direkt oder indirekt mit dem Lenkritzel verbunden, welches über eine entsprechende Zahnstange und Spurstangen die Lenkbewegung auf die gelenkten Räder des Kraftfahrzeugs überträgt.

Hilfskraftunterstützungen, beispielsweise elektrische Hilfskraftunterstützungen oder hydraulische Hilfskraftunterstützungen, werden zum Eintragen der entsprechenden Hilfsdrehmomente üblicherweise an der Ausgangswelle, am Lenkritzel oder an der Zahnstange angesetzt. Die jeweilige Hilfskraftunterstützung wird dabei über die Bestimmung des vom Fahrer über das Lenkrad in die Eingangswelle eingetragenen Drehmoments bezüglich der Ausgangswelle angesteuert.

Hierbei ist es bekannt, die Eingangswelle und die Ausgangswelle einer Lenkwelle mittels eines Drehstabes, welcher auch als Torsionsstab oder "*Torsion Bar"* bezeichnet wird, zu verbinden und über einen Drehmomentsensor das Eingangsdrehmoment aus dem relativen Verdrehwinkel zwischen der Eingangswelle und der Ausgangswelle zu bestimmen. Bei einer hydraulischen Servolenkung kann dies beispielsweise über ein Drehschieberventil stattfinden und bei einer elektromechanischen Servolenkung beispielsweise über entsprechende Magnetsensoren.

Lenkwellen für elektromechanische Hilfskraftunterstützungen werden zur Messung des eingetragenen Drehmoments genutzt. Beim Einbringen einer Lenkbewegung über ein Lenkrad des Kraftfahrzeuges durch den jeweiligen Fahrer wird ein Drehmoment in die Lenkwelle, und insbesondere in eine Eingangswelle, eingebracht, um schlussendlich die Räder des Kraftfahrzeuges zu verschwenken. Der zwischen der Eingangswelle und der Ausgangswelle angeordnete Drehstab dient dabei dazu, das eingebrachte Drehmoment von der Eingangswelle auf die Ausgangswelle zu übertragen, wobei er um ein definiertes Maß, welches dem über die Eingangswelle eingebrachten Drehmoment entspricht, tordiert wird, so dass eine relative Verdrehung zwischen der Eingangswelle und der Ausgangswelle erreicht wird. Aus dieser Relativverdrehung zwischen Eingangswelle und Ausgangswelle, welche mit dem Sensor abgetastet werden kann, kann die Hilfskraftunterstützung entsprechend angesteuert werden.

Da der Drehstab sowohl in der Eingangswelle als auch in der Ausgangswelle fixiert ist, erfolgt entsprechend eine Relativverdrehung zwischen der Eingangswelle und dem Drehstab sowie zwischen der Ausgangswelle und dem Drehstab. Die Verdrehung zwischen Eingangswelle und Drehstab rührt daher, dass der Drehstab in einer Bohrung an einem Ende der Bohrung der Eingangswelle rotationsfest gehalten ist, und sich dann durch die Bohrung hindurch zur Ausgangswelle zu erstreckt. Am Übergang zur Ausgangswelle findet entsprechend eine Relativverdrehung zwischen Drehstab und der gegenüberliegenden Wand der Bohrung der Eingangswelle statt.

Um eine Überlastung des Drehstabes zu verhindern, können die Eingangswelle und die Ausgangswelle über einen losen Formschluss miteinander verbunden oder gekoppelt sein, derart, dass ein direktes formschlüssiges Eingreifen der Eingangswelle mit der Ausgangswelle beim Überschreiten eines Maximalwerts für die elastische Verdrehung des Drehstabes auftritt.

Um Schiefstellungen zwischen der Eingangswelle und dem Drehstab zu verhindern, ist in der Bohrung ein Lagerelement vorgesehen, mittels welchem der Drehstab gegenüber dem ersten Wellenteil gelagert wird. Üblicherweise ist der Drehstab über ein Nadellager beziehungsweise eine Gleitbuchse als Lagerung in der Bohrung der Ausgangswelle gelagert. Um hier eine Verfälschung der Drehmomentmessung zu verhindern und gleichzeitig eine Geräuschbildung zu minimieren, welche beispielsweise durch ein vorhandenes Lagerspiel auftreten kann, bestehen an diese Lagerelemente hohe Toleranzanforderungen.

Aus der DE 100 10 837 A1 ist ein Drehschieber mit einer Drehstabbefestigung ohne spannende Bearbeitung bekannt, bei welchem ein Drehschieber, der eine mittige axiale Bohrung mit einer Wandung aufweist, sowie ein Drehstab, welcher koaxial in der Bohrung angeordnet ist, vorgesehen sind und wobei zwischen dem Drehstab und der Wandung der koaxialen Bohrung ein Nadellager vorgesehen ist.

### Darstellung der Erfindung

Ausgehend von dem genannten Stand der Technik ist es eine Aufgabe der vorliegenden Erfindung, eine Lenkwelle für eine Kraftfahrzeuglenkung anzugeben, bei welcher die Anforderungen an die Bauteilgenauigkeit verringert werden, und gleichzeitig dennoch eine Geräuschbildung zumindest verringert werden kann.

Diese Aufgabe wird durch eine Lenkwelle mit den Merkmalen des Anspruchs 1 gelöst. Vorteilhafte Weiterbildungen ergeben sich aus den Unteransprüchen.

Entsprechend wird eine Lenkwelle für eine Kraftfahrzeuglenkung vorgeschlagen, umfassend einen ersten Wellenteil mit einer Bohrung, in welcher zur Übertragung eines Drehmoments ein Drehstab zur drehelastischen Kopplung des ersten Wellenteils mit einem zweiten Wellenteil vorgesehen ist, wobei der Drehstab in der Bohrung gegenüber dem ersten Wellenteil über ein Lagerelement drehbar gelagert ist. Erfindungsgemäß umfasst das Lagerelement ein Vorspannelement.

Dadurch, dass das Lagerelement ein Vorspannelement umfasst, ist es möglich, bei reduzierten Toleranzanforderungen dennoch eine Reduktion von Geräuschen bei der Lagerung des Drehstabs in der Bohrung des ersten Wellenteils bereitzustellen, da ein Lagerspiel des Lagers aufgrund der Vorspannung reduziert wird.

Entsprechend ist ein Vorspannelement oder ein Federelement zwischen einer inneren Mantelfläche des ersten Wellenteils und/oder des zweiten Wellenteils und einer äußeren Mantelfläche des Drehstabes angeordnet, wobei sich das Vorspannelement oder das Federelement auf der inneren Mantelfläche und auf der äußeren Mantelfläche derart direkt oder indirekt abstützt, dass die innere Mantelfläche zur äußeren Mantelfläche koaxial vorgespannt ist.

Damit kann der Drehstab auch bei größeren Toleranzen in der äußeren Mantelfläche und/oder der inneren Mantelfläche und den sich daraus ergebenden Lagerspielen im Wesentlichen spielfrei gelagert werden und die Emission von -Geräuschen kann reduziert werden.

Bevorzugt ist das Vorspannelement zur Aufbringung einer radialen Vorspannkraft vorgesehen, um den Drehstab relativ zu der Bohrung des ersten Wellenteils radial vorzuspannen. Besonders bevorzugt wird der Drehstab dabei über das Vorspannelement so radial vorgespannt, dass er koaxial zum ersten Wellenteil vorgespannt ist.

Das Vorspannelement ist bevorzugt als Wälzlagerinnenring und/oder als Wälzlageraußenring eines radial vorgespannten Wälzlagers mit mindestens einem Wälzkörper ausgebildet. In einer weiteren bevorzugten Ausbildung ist das Lagerelement ein radial vorgespanntes Wälzlager, bevorzugt ein radial vorgespanntes Nadellager. Die Vorspannung ist dabei gegenüber den korrespondierenden Wellenabschnitten ausgebildet, die entweder selbst Teil des Lagers sind oder Elemente des Lagers tragen.

In einer bevorzugten Ausbildung ist das Lagerelement durch das Vorspannelement selbst ausgebildet. Besonders bevorzugt ist das Vorspannelement als vorgespannte Gleitbuchse oder Gleitlager, bevorzugt als taillierte, eine radiale Vorspannung aufbringende Gleitbuchse ausgebildet. Die Buchse kann dabei auch in einer Wellenform im Längsschnitt gesehen ausgebildet sein und entsprechend mehrere Taillierungen aufweisen. Auf diese Weise lässt sich auf besonders einfache Weise, beispielsweise durch ein einfaches Blechteil, eine radial vorgespannte Lagerung erreichen, welche zu reduzierten Toleranzanforderungen an die Lagerbereiche des ersten und/oder zweiten Wellenteils sowie des Drehstabs führt. Die Gleitbuchse kann zur Verbesserung der tribologischen Eigenschaften eine Oberflächenbeschichtung, wie zum Beispiel Polytetrafluorethylen (PTFE), umfassen.

In einer weiteren bevorzugten Ausbildung kann das Vorspannelement als elastische Kunststoffhülse ausgebildet sein, welche dann die radiale Vorspannung bereitstellt. So lässt sich ein Lagerelement besonders wirtschaftlich herstellen.

In einer Weiterbildung kann, im Falle des Einsatzes eines Wälzlagers, auch ein Wälzkörper als Vorspannelement ausgebildet sein, beispielsweise in Form eines elastischen Wälzkörpers oder eines hohlen, dünnwandigen Stahlzylinders.

In einer bevorzugten Ausgestaltung ist der erste Wellenteil eine Ausgangswelle, welche über den Drehstab mit einem als Eingangswelle ausgebildeten zweiten Wellenteil gekoppelt ist.

Um eine Zerstörung des Drehstabs beim Eintragen zu hoher Drehmomente zu vermeiden, ist der erste Wellenteil mit dem zweiten Wellenteil bevorzugt zusätzlich über einen losen Formschluss verbunden.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Darstellung einer Kraftfahrzeuglenkung mit einer Hilfskraftunterstützung;
- Figur 2: eine schematische perspektivische Darstellung einer Lenkwelle mit einem ersten Wellenteil und einem zweiten Wellenteil;
- Figur 3: eine schematische perspektivische Explosionsdarstellung der Lenkwelle der Figur 2;
- Figur 4: eine schematische perspektivische Darstellung der Lenkwelle der Figuren 2 und 3 in einem Zwischenmontagezustand;
- Figur 5: eine schematische Querschnittansicht durch Abschnitte der Lenkwelle der Figuren 2 bis 4 in einem montierten Zustand;
- Figur 6: eine schematische Querschnittansicht durch einen Lagerbereich in einer ersten Ausführungsform;
- Figur 7: eine schematische Schnittdarstellung durch einen Lagerbereich in einem zweiten Ausführungsbeispiel;
- Figur 8: eine schematische Schnittdarstellung durch einen Lagerbereich in einem dritten Ausführungsbeispiel;
- Figur 9: eine schematische Schnittdarstellung durch einen Lagerbereich in einem vierten Ausführungsbeispiel;
- Figur 10: eine schematische Schnittdarstellung durch einen Lagerbereich in einem fünften Ausführungsbeispiel; und
- Figur 11: eine schematische perspektivische Darstellung einer Lenkwelle mit einem Lenkritzel in einer weiteren Ausbildung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

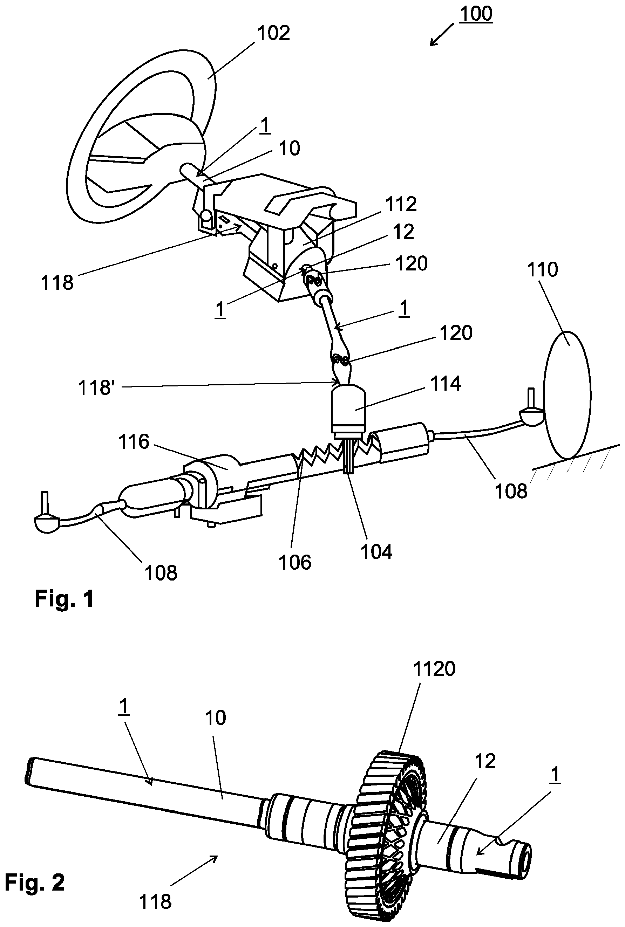

In Figur 1 ist eine schematische Darstellung einer Kraftfahrzeuglenkung 100 gezeigt, wobei ein Fahrer über ein Lenkrad 102 ein entsprechendes Drehmoment als Lenkbefehl in eine Lenkwelle 1 einbringen kann. Das Drehmoment wird dann über die Lenkwelle 1 auf ein Lenkritzel 104 übertragen, welches mit einer Zahnstange 106 kämmt, die dann ihrerseits über entsprechende Spurstangen 108 den vorgegebenen Lenkwinkel auf die lenkbaren Räder 110 des Kraftfahrzeugs überträgt.

Eine elektrische und/oder hydraulische Hilfskraftunterstützung kann in Form der mit der Lenkwelle 1 gekoppelten Hilfskraftunterstützung 112, der mit dem Ritzel 104 gekoppelten Hilfskraftunterstützung 114 und/oder der mit der Zahnstange 106 gekoppelten Hilfskraftunterstützung 116 vorgesehen sein. Die jeweilige Hilfskraftunterstützung 112, 114 oder 116 trägt ein Hilfsdrehmoment in die Lenkwelle 1, das Lenkritzel 104 und/oder eine Hilfskraft in die Zahnstange 106 ein, wodurch der Fahrer bei der Lenkarbeit unterstützt wird. Die drei unterschiedlichen in der Figur 1 dargestellten Hilfskraftunterstützungen 112, 114 und 116 zeigen mögliche Positionen für deren Anordnung.

Üblicher Weise ist nur eine einzige der gezeigten Positionen mit einer Hilfskraftunterstützung belegt. Das Hilfsdrehmoment oder die Hilfskraft, welches beziehungsweise welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten Eingangsdrehmoments bestimmt. Alternativ oder in Kombination mit der Einbringung des Hilfsdrehmomentes beziehungsweise der Hilfskraft kann mit der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eine mit dem Lenkrad 102 verbundene Eingangswelle 10 und eine mit der Zahnstage 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann beispielsweise über einen Drehwinkelsensor gemessen werden und entsprechend aufgrund der bekannten Torsionssteifigkeit des Drehstabes in ein entsprechendes Eingangsdrehmoment relativ zur Ausgangswelle bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise in Form eines Drehschiebeventils, einer elektromagnetischen oder anderen Messung der Relativverdrehung realisiert werden.

Entsprechend wird ein Drehmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 hervorrufen, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder eine einzutragende Hilfskraft bestimmen zu können.

Die Lenkwelle 1 in der Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann.

Die nachfolgend in den Figuren 2 bis 10 sowie 11 dargestellten Ausführungsbeispiele der Lenkwelle 1 lassen sich besonders gut mit der in Figur 1 gezeigten Anordnung des Drehmomentsensors 118 in Verbindung mit der mit der Lenkwelle 1 gekoppelten Hilfskraftunterstützung 112 verbinden.

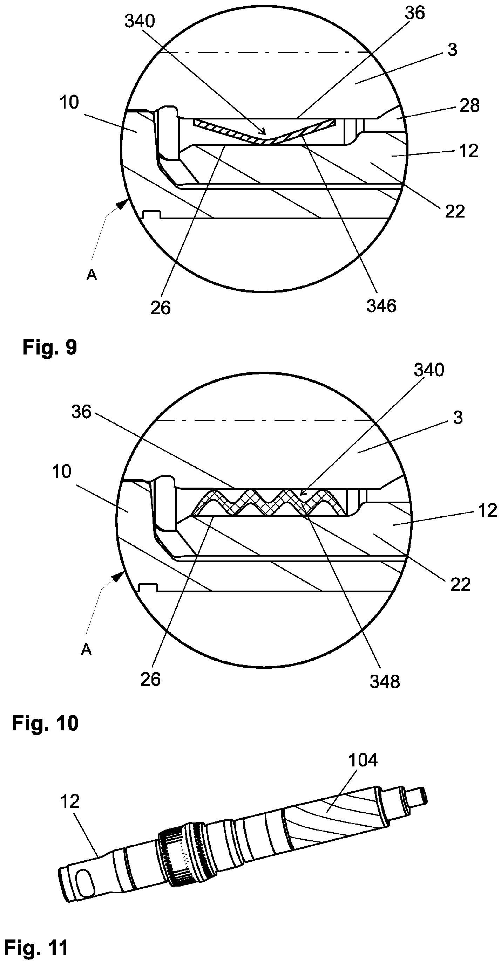

Die in Figur 11 gezeigte Ausführungsform der Lenkwelle 1 ist besonders gut zusammen mit der Anordnung des Drehmomentsensor 118' in Verbindung mit der mit dem Ritzel 104 gekoppelten Hilfskraftunterstützung 114 beziehungsweise der mit der Zahnstange 106 gekoppelten Hilfskraftunterstützung 116 zu verwenden.

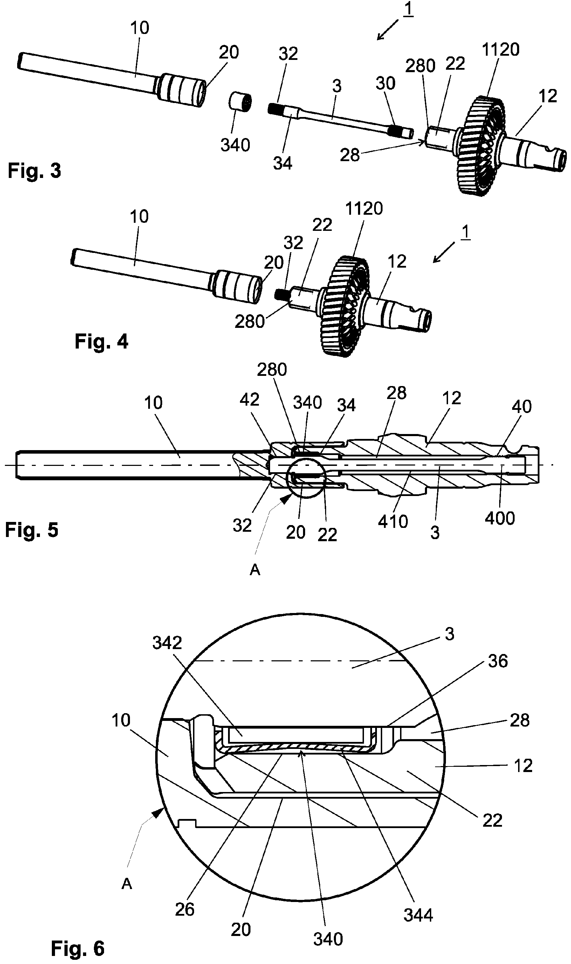

Figur 2 zeigt schematisch eine Lenkwelle 1 mit einer als erstes Wellenteil ausgebildeten Ausgangswelle 12 und einer als zweites Wellenteil ausgebildeten Eingangswelle 10, wobei der Bereich des Zusammentreffens der Eingangswelle 10 mit der Ausgangswelle 12 von dem in Figur 1 gezeigten Drehmomentsensor 118 überspannt wird. Die Eingangswelle 10 ist bezüglich der Ausgangswelle 12 koaxial angeordnet und mit dieser drehelastisch über einen in Figur 2 nicht zu erkennenden, sondern intern verlaufenden Drehstab verbunden, wobei der konkrete Aufbau der Lenkwelle 1 in den Figuren 3 bis 5 verdeutlicht wird.

Zum Eintragen des Hilfsdrehmoments durch die Hilfskraftunterstützung 112 ist auf der Ausgangswelle 12 drehfest ein Schneckenzahnrad 1120 vorgesehen. Auf das Schneckenzahnrad 1120 kann entsprechend ein Abtrieb eines Elektromotors beziehungsweise Servomotors der Hilfskraftunterstützung 112 wirken. In einer Alternative kann auch ein hydraulischer Antrieb vorgesehen sein. Die Hilfskraftunterstützung 112 dient daher dazu, das über den Drehmomentsensor 118 ermittelte Hilfsdrehmoment zur Lenkunterstützung des Fahrers in die Ausgangswelle 12 und damit in sämtliche stromabwärts der Ausgangswelle 12 liegenden Komponenten der Kraftfahrzeuglenkung 100 einzutragen.

Um das Drehmoment beziehungsweise den Betrag der über das Schneckenzahnrad 1120 einzubringenden Hilfskraft genau bestimmen zu können, sind, wie bereits oben beschrieben, die Eingangswelle 10 und die Ausgangswelle 12 drehelastisch miteinander verbunden, so dass der jeweilige Lenkbefehl, welcher vom Fahrer über das Lenkrad 102 in die Eingangswelle 10 eingetragen wird, in einer Unterstützung des Fahrers durch die Hilfskraftunterstützung 112, welche auf das Schneckenzahnrad 1120 und damit auf die Lenkwelle 1 wirkt, resultiert. Hierzu ist der Drehmomentsensor 118 vorgesehen, welcher die Relativdrehung zwischen der Eingangswelle 10 und der Ausgangswelle 12 beziehungsweise den entsprechenden Relativdrehwinkel zwischen Eingangswelle 10 und Ausgangswelle 12 bestimmt und auf dieser Grundlage das von der Hilfskraftunterstützung 112 bereit zu stellende Hilfsdrehmoment bestimmt werden kann.

In Figur 3 ist eine schematische Explosionsdarstellung der Lenkwelle 1 gezeigt, wobei die Eingangswelle 10 und die Ausgangswelle 12 zusammen mit dem Schneckenzahnrad 1120 gezeigt sind.

Die Eingangswelle 10 weist einen Aufnahmebereich 20 auf, welcher zur Aufnahme eines dazu komplementären Einsetzbereichs 22 der Ausgangswelle 12 dient. Dies ist in der Schnittdarstellung der Figur 5 noch einmal besonders deutlich zu sehen, wobei der Einsetzbereich 22 der Ausgangswelle 12 in dem Aufnahmebereich 20 der Eingangswelle 10 so aufgenommen ist, dass sich im Prinzip die Eingangswelle 10 gegenüber der Ausgangswelle 12 frei drehen kann, gleichzeitig aber in radialer Richtung geführt ist. Ein geringes Spiel liegt zwischen dem Aufnahmebereich 20 und dem Einsetzbereich 22 vor, um eine im Wesentlichen reibungsfreie Drehbarkeit zu erreichen.

Ein Drehstab 3 verbindet die Eingangswelle 10 mit der Ausgangswelle 12 drehelastisch. Diese drehelastische Verbindung der Eingangswelle 10 mit der Ausgangswelle 12 ist in Figur 5 schematisch in einer Schnittdarstellung gezeigt. Der Drehstab 3 weist hierzu an seinem der Ausgangswelle 12 zugewandten Ende einen Fügeabschnitt 30 und an seinem der Eingangswelle 10 zugewandten Ende einen Fügeabschnitt 32 auf. Der der Ausgangswelle 12 zugewendete Fügeabschnitt 30 des Drehstabes 3 ist mit der Ausgangswelle 12 in einer Fügeaufnahme 40 der Ausgangswelle 12 drehfest verbunden. Der der Eingangswelle 10 zugewendeten Fügeabschnitt 32 des Drehstabes 3 ist mit der Eingangswelle 10 in einer Fügeaufnahme 42 der Eingangswelle 10 drehfest verbunden.

Der Drehstab 3 ist dabei in einer Bohrung 28 in der Ausgangswelle 12 aufgenommen und erstreckt sich von der Fügeaufnahme 40 der Ausgangswelle 12 durch die Bohrung 28 und durch deren offenes Ende 280 hindurch in Richtung der Fügeaufnahme 42 der Eingangswelle 10.

Der Drehstab 3 weist in der gezeigten Ausführungsform einen Lagerbereich 34 mit einer Lageraufnahme 36 auf, an welcher ein Lagerelement 340 so gehalten werden kann, dass, wie sich beispielsweise aus Figur 5 ergibt, der am Fügeabschnitt 30 an der Ausgangswelle 12 drehfest gehaltene Drehstab 3 relativ zu der Ausgangswelle 12 in der Bohrung 28 der Ausgangswelle 12 frei verdrehen kann.

Der Drehstab 3 wird dabei durch das Lagerelement 340 im Wesentlichen koaxial zu der Eingangswelle 10 und der Ausgangswelle 12 gehalten. Dabei wird eine mögliche Schiefstellung zwischen der Eingangswelle 10 und der Ausgangswelle 12 vermieden.

In Figur 4 ist schematisch ein Montagezustand der Lenkwelle 1 gezeigt, in welchem der Drehstab 3 bereits in die Bohrung 28 der Ausgangswelle 12 eingefügt ist und der Fügeabschnitt 30 des Drehstabes 3 kraft- und formschlüssig mit der Fügeaufnahme 40 der Ausgangswelle 12 verbunden ist. Entsprechend ragt lediglich noch der andere Fügeabschnitt 32 des Drehstabes 3 aus der Ausgangswelle 12 heraus, so dass in einem nachfolgenden Montageschritt der Einsetzbereich 22 der Ausgangswelle 12 in den entsprechenden Aufnahmebereich 20 der Eingangswelle 12 eingeführt werden kann, wodurch der Fügeabschnitt 32 des Drehstabes 3 in die entsprechende Fügeaufnahme 42 der Eingangswelle 10 eingepresst wird.

Um beim Eintragen eines hohen Drehmomentes mittels des Lenkrads eine Überlastung des Drehstabes 3 beziehungsweise der Verbindung des Drehstabes 3 mit der Eingangswelle 10 und/oder der Ausgangswelle 12 zu verhindern, sind die Eingangswelle 10 und die Ausgangswelle 12 zusätzlich zur drehelastischen Verbindung über den Drehstab 3 bevorzugt über einen losen Formschluss so miteinander verbunden, dass ein Maximalwert für die Relativdrehung der Eingangswelle 10 zur Ausgangswelle 12 und damit auch ein Maximalwert für die Verdrehung des Drehstabes 3 vorgegeben ist.

Entsprechend muss bei der in Figur 4 gezeigten Montage darauf geachtet werden, dass der Drehstab 3 in der Mittelstellung des losen Formschlusses bezüglich des entsprechenden Maximaldrehwinkels gefügt wird.

In Figur 5 ist bei dem Bezugszeichen A in dem Kreisausschnitt schematisch ein Lagerelement 340 gezeigt, welches im Lagerbereich 34 des Drehstabes 3 angeordnet ist, und welches zwischen der Lageraufnahme 36 im Lagerbereich 34 des Drehstabes 3 und einer Lageraufnahme 26 der Ausgangswelle 12 angeordnet ist. Die Lageraufnahme 26 ist an der inneren Mantelfläche der Bohrung 28 in der Ausgangswelle 12 vorgesehen. In dem gezeigten Ausführungsbeispiel ist die Lageraufnahme 26 innerhalb der Bohrung 28 in der unmittelbaren Nähe des offenen Endes 280 der Ausgangswelle 12 vorgesehen.

Das Lagerelement 340 ist im Lagerbereich 34 des Drehstabs 3 vorgesehen, um den Drehstab 3 im Wesentlichen koaxial zu der Ausgangswelle 12 in der Bohrung 28 zu halten und entsprechend eine Schiefstellung zwischen der Eingangswelle 10, der Ausgangswelle 12 und dem Drehstab 3 zu vermeiden, um eine mögliche Verfälschung der Drehmomentmessung und/oder eine mögliche Geräuschbildung zu minimieren.

Das Lagerelement 340 umfasst in den Ausführungsbeispielen ein Vorspannelement, welches eine radiale Vorspannkraft zwischen der Ausgangswelle 12 und dem Drehstab 3 aufbauen kann und auf diese Weise den Drehstab 3 koaxial zur Ausgangswelle 12 halten kann.

In den Figuren 6 bis 10 sind unterschiedliche Ausgestaltungen des das Vorspannelement umfassenden Lagerelements 340 gezeigt.

In der Figur 6 ist der mit dem Bezugszeichen A bezeichnete Ausschnitt aus der Figur 5 in einem ersten Ausführungsbeispiel gezeigt.

In diesem Ausführungsbeispiel umfasst das Lagerelement 340 um den Umfang herum angeordnete Wälzkörper 342, welche in einem das Vorspannelement ausbildenden federnden Wälzlagerring 344 gehalten sind. Der Wälzlagerring 344 stützt sich direkt an der Lageraufnahme 26 der Ausgangswelle 12 ab. Die Wälzkörper 342 wälzen direkt auf der Lageraufnahme 36 des Drehstabes 3. Damit sind die Ausgangswelle 12 und der Drehstab 3 über den als Vorspannelement ausgebildeten Wälzlagerring 344 gegeneinander vorgespannt, wobei der Wälzlagerring 344 eine radiale Vorspannung auf die Wälzkörper 342 ausübt. Das Vorspannelement in Form des Wälzlagerrings 344 wirkt entsprechend indirekt, nämlich über die Wälzkörper 342, auf den Drehstab 3. Der Wälzlagerring 344 ist hier als Wälzlageraußenring ausgebildet.

Der als Vorspannelement ausgebildete Wälzlagerring 344 ist bevorzugt in Form eines Blechteils, beispielsweise in Form eines Blechhülsenrings, der in seinem mittleren Bereich eingeschnürt ist, ausgebildet. Die Stärke des Blechs ist dabei so ausgebildet, dass der Wälzlagerring 344 elastische Eigenschaften aufweist und entsprechend eine Vorspannung ausüben kann.

Die Wälzkörper 342 können aus Kunststoff bestehen oder können als Stahlkörper ausgebildet sein - insbesondere bei der Ausbildung eines radial vorgespannten Nadellagers. In einer Weiterbildung können auch die Wälzkörper elastisch ausgebildet sein, beispielsweise als dünne, hohle Stahlwalzen.

Der Wälzlagerring 344 weist in der gezeigten Ausführungsform eine taillierte Form auf und bildet entsprechend ein federndes Teil aus, welches die Wälzkörper 342 gegen die Lageraufnahme 36 des Drehstabes 3 vorspannt.

Aufgrund des das Vorspannelement in Form des Wälzlagerringes 344 aufweisenden Lagerelementes 340 sind die Wälzlager 342 dazu in der Lage, stets den Außenkonturen der Lageraufnahme 36 des Drehstabes 3 zu folgen. Entsprechend können die Toleranzanforderungen an die Lageraufnahme 36 sowie die Toleranzanforderungen an die Lageraufnahme 26 gegenüber der Verwendung eines herkömmlichen Wälzlagers beziehungsweise Nadellagers reduziert werden, wobei gleichzeitig auch die Klapperneigung beziehungsweise die Neigung, Geräusche zu emittieren, reduziert wird.

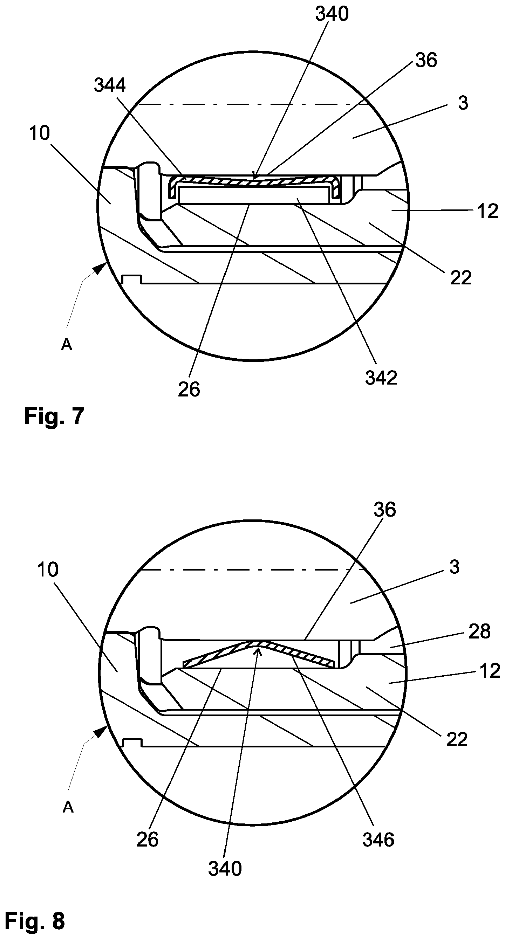

In einem weiteren Ausführungsbeispiel, welches in der Figur 7 gezeigt ist, ist das Lagerelement 340 durch Wälzkörper 342 und ein Vorspannelement in Form eines Wälzlagerringes 344 dargestellt. Der Wälzlagerring 344 stützt sich hier an der Lageraufnahme 36 des Drehstabs 3 ab und die Wälzkörper 342 wälzen auf der Lageraufnahme 26, so dass hier wieder eine radiale Vorspannung zwischen der Lageraufnahme 26 der Ausgangswelle 12 und der Lageraufnahme 36 des Drehstabs 3 ausgebildet wird, welche dafür sorgt, dass der Drehstab 3 koaxial zu der Ausgangswelle 12 gehalten wird. Der Wälzlagerring 344 ist hier als Wälzlagerinnenring ausgebildet.

Weiterhin können die Wälzkörper 342 durch die aufgebrachte Vorspannung den Konturen der Lageraufnahme 26 besser folgen, so dass eine Klapperneigung auch bei reduzierten Toleranzanforderungen weiter reduziert werden kann.

Der Wälzlagerring 344 ist tailliert ausgebildet, so dass er eine Vorspannung auf die Wälzkörper 342 in radialer Richtung ausübt und entsprechend die Wälzkörper 342 auf die Lageraufnahme 26 der Ausgangswelle 12 sowie die Lageraufnahme 36 des Drehstabes 3 vorspannt.

In Figur 8 ist eine schematische Schnittdarstellung eines Lagerelements 340 in einer weiteren Ausführungsform gezeigt. Hier ist das Lagerelement 340 durch ein Vorspannelement, welches in Form einer radial federnden Gleitbuchse 346 ausgebildet ist, gezeigt. Die radial federnde Gleitbuchse 346 ist tailliert ausgeformt und ist entsprechend in der Lage, eine radiale Vorspannung auszubilden.

Die Gleitbuchse 346 stützt sich sowohl an der Lageraufnahme 26 als auch an der Lageraufnahme 36 ab, so dass das Lagerelement 340 die Vorspannung direkt überträgt.

Das Lagerelement 340 ist entsprechend so ausgebildet, dass das Vorspannelement 344 den Drehstab 3 in der Bohrung 28 derart radial vorspannt, dass der Drehstab 3 koaxial zur Ausgangswelle 12 gehalten ist.

In Figur 9 ist ein weiteres Ausführungsbeispiel des Lagerelementes 340 gezeigt, bei welchem wiederum ein Vorspannelement in Form einer radial federnden Gleitbuchse 346 ausgebildet ist, welche entsprechend als Vorspannelement dient. Die Gleitbuchse 346 ist tailliert ausgebildet, um die entsprechende Vorspannkraft aufbringen zu können.

Die in der Figur 9 gezeigte Gleitbuchse 346 ist in einer umgekehrten Orientierung, als die in Figur 8 gezeigte Orientierung, zwischen den Lagerbereichen 26 und 36 angeordnet.

In Figur 10 ist eine weitere schematische Schnittdarstellung gezeigt, bei welcher das Lagerelement 340 wiederum als Vorspannelement ausgebildet ist, wobei das Lagerelement 340 hier durch eine elastische Kunststoffhülse 348 ausgebildet ist, welche eine Vorspannung zwischen der Lageraufnahme 26 der Ausgangswelle 12 sowie der Lageraufnahme 36 des Drehstabes 3 in radialer Richtung bereitstellt. Prinzipiell könnten auch die Vorspannelemente 346, 344, wie sie beispielsweise in den Figuren 6, 7, 8 und 9 dargestellt sind, auch als Kunststoffhülse ausgebildet sein.

In Figur 11 ist eine schematische perspektivische Darstellung einer Lenkwelle 1 in einer weiteren Ausbildung gezeigt, welche eine Eingangswelle 10 und eine Ausgangswelle 12 umfasst und welche dazu vorgesehen ist, beispielsweise zusammen mit dem Drehmomentsensor 118' der Figur 1 eingesetzt zu werden. Entsprechend ist an der Ausgangswelle 12 direkt anschließend das Lenkritzel 104 vorgesehen und ein Hilfsdrehmoment wird mittels der Hilfskraftunterstützung 114 direkt auf das Lenkritzel 104 und/oder mittels der Hilfskraftunterstützung 116 direkt auf die Zahnstange 106 aufgebracht. Die in Figur 11 gezeigte Lenkwelle 1 weist intern im Wesentlichen den gleichen Aufbau auf, wie er in den unterschiedlichen Ausführungsformen in den Figuren 2 bis 10 gezeigt ist.

### Bezuqszeichenliste

- 1: Lenkwelle
- 10: Eingangswelle
- 12: Ausgangswelle
- 100: Kraftfahrzeuglenkung
- 102: Lenkrad
- 104: Lenkritzel
- 106: Zahnstange
- 108: Spurstange
- 110: lenkbares Rad
- 112: Hilfskraftunterstützung
- 114: Hilfskraftunterstützung
- 116: Hilfskraftunterstützung
- 118: Drehmomentsensor
- 118': Drehmomentsensor
- 120: kardanisches Gelenk
- 1120: Schneckenzahnrad

- 20: Aufnahmebereich
- 22: Einsetzbereich
- 26: Lageraufnahme
- 28: Bohrung
- 280: offenes Ende

- 3: Drehstab
- 30: Fügeabschnitt
- 32: Fügeabschnitt
- 34: Lagerbereich
- 36: Lageraufnahme
- 340: Lagerelement
- 342: Wälzkörper
- 344: Wälzlagerring
- 346: Gleitbuchse
- 348: Elastische Kunststoffhülse

- 40: Fügeaufnahme
- 42: Fügeaufnahme

## Patentansprüche

1. Lenkwelle (1) für eine Kraftfahrzeuglenkung, umfassend einen ersten Wellenteil (12) mit einer Bohrung (28), in welcher zur Übertragung eines Drehmoments ein Drehstab (3) zur drehelastischen Kopplung des ersten Wellenteils (12) mit einem zweiten Wellenteil (10) vorgesehen ist, wobei der Drehstab (3) in der Bohrung (28) gegenüber dem ersten Wellenteil (12) über ein Lagerelement (340) drehbar gelagert ist,
**dadurch gekennzeichnet, dass**
das Lagerelement (340) ein Vorspannelement (344, 346, 348) umfasst.

2. Lenkwelle (1) gemäß Anspruch 1, **dadurch gekennzeichnet, dass** das Vorspannelement (344, 346, 348) zur Aufbringung einer radialen Vorspannkraft ausgebildet ist.

3. Lenkwelle (1) gemäß Anspruch 1 oder 2, **dadurch gekennzeichnet, dass** das Lagerelement (340) durch das Vorspannelement ausgebildet ist.

4. Lenkwelle (1) gemäß einem der vorstehenden Ansprüche, **dadurch gekennzeichnet, dass** das Vorspannelement als Blechelement ausgebildet ist.

5. Lenkwelle (1) gemäß einem der vorstehenden Ansprüche 1 bis 3, **dadurch gekennzeichnet, dass** das Vorspannelement (348) als elastische Kunststoffhülse ausgebildet ist.

6. Lenkwelle (1) gemäß einem der vorstehenden Ansprüche, **dadurch gekennzeichnet, dass** das Lagerelement (340) ein radial vorgespanntes Wälzlager ist.

7. Lenkwelle (1) gemäß einem der vorhergehenden Ansprüche, **dadurch gekennzeichnet, dass** das Vorspannelement (344) als Wälzlagerinnenring und/oder als Wälzlageraußenring eines radial vorgespannten Wälzlagers, mit mindestens einem Wälzkörper (342), ausgebildet ist.

8. Lenkwelle (1) gemäß einem der Ansprüche 1, 2 oder 6, **dadurch gekennzeichnet, dass** das Vorspannelement durch einen elastischen Wälzkörper ausgebildet ist.

9. Lenkwelle (1) gemäß einem der vorhergehenden Anspruch 1 bis 5, **dadurch gekennzeichnet, dass** das Vorspannelement (346) als vorgespanntes Gleitlager, ausgebildet ist.

10. Lenkwelle (1) gemäß einem der vorstehenden Ansprüche, **dadurch gekennzeichnet, dass** der erste Wellenteil (12) mit dem zweiten Wellenteil (10) zusätzlich über einen losen Formschluss verbunden ist.

## Claims

1. Steering shaft (1) for a motor vehicle steering system, comprising a first shaft part (12) with a bore (28), in which, in order to transmit a torque, a torsion bar (3) is provided for rotationally elastic coupling of the first shaft part (12) to a second shaft part (10), the torsion bar (3) being mounted in the bore (28) such that it can be rotated with respect to the first shaft part (12) via a bearing element (340),
**characterized in that**
the bearing element (340) comprises a prestressing element (344, 346, 348).

2. Steering shaft (1) according to Claim 1, **characterized in that** the prestressing element (344, 346, 348) is configured to apply a radial prestressing force.

3. Steering shaft (1) according to Claim 1 or 2, **characterized in that** the bearing element (340) is configured by way of the prestressing element.

4. Steering shaft (1) according to one of the preceding claims, **characterized in that** the prestressing element is configured as a sheet metal element.

5. Steering shaft (1) according to one of the preceding claims 1 to 3, **characterized in that** the prestressing element (348) is configured as an elastic plastic sleeve.

6. Steering shaft (1) according to one of the preceding claims, **characterized in that** the bearing element (340) is a radially prestressed anti-friction bearing.

7. Steering shaft (1) according to one of the preceding claims, **characterized in that** the prestressing element (344) is configured as an anti-friction bearing inner ring and/or as an anti-friction bearing outer ring of a radially prestressed anti-friction bearing, with at least one rolling body (342).

8. Steering shaft (1) according to one of Claims 1, 2 or 6, **characterized in that** the prestressing element is configured by way of an elastic rolling body.

9. Steering shaft (1) according to one of the preceding Claims 1 to 5, **characterized in that** the prestressing element (346) is configured as a prestressed plain bearing.

10. Steering shaft (1) according to one of the preceding claims, **characterized in that** the first shaft part (12) is additionally connected to the second shaft part (10) via a loose positively locking connection.

## Revendications

1. Arbre de direction (1) pour une direction d'un véhicule automobile, comprenant une première partie d'arbre (12) avec un alésage (28) dans lequel, pour la transmission d'un couple, une barre de torsion (3) est prévue pour l'accouplement élastique en torsion de la première partie d'arbre (12) à une deuxième partie d'arbre (10), la barre de torsion (3) étant supportée de manière rotative dans l'alésage (28) par rapport à la première partie d'arbre (12) par le biais d'un élément de palier (340),
**caractérisé en ce que**
l'élément de palier (340) comprend un élément de précontrainte (344, 346, 348).

2. Arbre de direction (1) selon la revendication 1, **caractérisé en ce que** l'élément de précontrainte (344, 346, 348) est réalisé pour appliquer une force de précontrainte radiale.

3. Arbre de direction (1) selon la revendication 1 ou 2, **caractérisé en ce que** l'élément de palier (340) est réalisé par l'élément de précontrainte.

4. Arbre de direction (1) selon l'une quelconque des revendications précédentes, **caractérisé en ce que** l'élément de précontrainte est réalisé sous forme d'élément en tôle.

5. Arbre de direction (1) selon l'une quelconque des revendications précédentes 1 à 3, **caractérisé en ce que** l'élément de précontrainte (348) est réalisé sous forme de douille en plastique élastique.

6. Arbre de direction (1) selon l'une quelconque des revendications précédentes, **caractérisé en ce que** l'élément de palier (340) est un palier à roulement précontraint radialement.

7. Arbre de direction (1) selon l'une quelconque des revendications précédentes, **caractérisé en ce que** l'élément de précontrainte (344) est réalisé sous forme de bague interne de palier à roulement et/ou sous forme de bague externe de palier à roulement d'un palier à roulement précontraint radialement, comprenant au moins un corps de roulement (342).

8. Arbre de direction (1) selon l'une quelconque des revendications 1, 2 ou 6, **caractérisé en ce que** l'élément de précontrainte est réalisé par un corps de roulement élastique.

9. Arbre de direction (1) selon l'une quelconque des revendications précédentes 1 à 5, **caractérisé en ce que** l'élément de précontrainte (346) est réalisé sous forme de palier lisse précontraint.

10. Arbre de direction (1) selon l'une quelconque des revendications précédentes, **caractérisé en ce que** la première partie d'arbre (12) est en outre connectée à la deuxième partie d'arbre (10) par le biais d'un engagement positif lâche.
